# EUROPÄISCHE PATENTANMELDUNG

(11) **EP 2 568 377 A1**
(43) Veröffentlichungstag der Anmeldung: **13.03.2013**
(21) Anmeldenummer: 12006294.8
(22) Anmeldetag: 06.09.2012
(51) Int. Cl.: G06F 9/44

(54) **Programmpaketinstallation**

(30) Priorität: 09.09.2011 DE 102011113091
(71) Anmelder: Giesecke & Devrient GmbH, 81677 München (DE)
(72) Erfinder: Baldischweiler, Michael, 81825 München (DE); Jauernig, Matthias, 81379 München (DE); Stocker, Thomas, 81739 München (DE)

(57) **Zusammenfassung**

Das erfindungsgemäße Installieren eines Programmpakets (200) in einem Sicherheitsmodul (10) spart aufgrund eines Auflösens nicht aufgelöster Referenzen in dem Programmpaket (200) vor dem Installieren des Programmpakets (200) in dem Sicherheitsmodul (10) Ressourcen ein. Das Auflösen der Referenzen wird dabei mittels einer von dem Sicherheitsmodul (10) verschiedenen Datenverarbeitungsvorrichtung (100) durchgeführt. Die Datenverarbeitungsvorrichtung (100) umfasst zumindest einen Speicher und einen Prozessor sowie eine Installationseinrichtung (110), welche eingerichtet ist, nicht aufgelöste Referenzen in dem Programmpaket (200) aufzulösen.

## Beschreibung

Die vorliegende Erfindung betrifft ein Verfahren und Vorrichtungen zum Installieren eines Programmpakets in einem Sicherheitsmodul.

Bei der Herstellung einer Menge identischer portabler Datenträger, beispielsweise Chipkarten, ist es bekannt, in einem ersten Schritt einen so genannten Masterdatenträger zu erstellen. Auf diesem Datenträger ausführbare Applikationen werden, sofern sie nicht bereits fest in einer ROM-Maske des Datenträgers gespeichert sind, in bekannter, nachstehend nochmals skizzierter Weise in einem nichtflüchtigen Speicher des Datenträgers, beispielsweise einem EEPROM- oder FLASH-Speicher, gespeichert und installiert. In einem nächsten Schritt wird ein Speicherabbild des nichtflüchtigen Speichers des Datenträgers erstellt. Dieses Speicherabbild kann dann in die übrigen, bereits mit der ROM-Maske versehenen, identisch auszubildenden Datenträger in bekannter, effizienter Weise eingebracht werden.

Wenn allerdings ein solcher Datenträger fertig gestellt ist oder sogar bereits an einen Nutzer ausgegeben worden ist, wird in der Regel betriebssystemseitig das Einspielen von Speicherabbildern, d.h. ein direkter Zugriff auf einen nichtflüchtigen Speicher des Datenträgers, verhindert. Eine Installation eines weiteren Programmpakets, welches beispielsweise neue und/oder aktualisierte Applikationen umfasst, ist dann lediglich in der nachfolgend beschriebenen Weise möglich.

Das Installieren eines solchen Programmpakets, beispielsweise eines Java Card™ CAP Files, in dem portablen Datenträger wird von einer Installationsapplikation des Datenträgers, beispielsweise eines Java Card™ Applet Installers, durchgeführt und umfasst mehrere Schritte. Zuerst wird das Programmpaket in den Datenträger geladen und in einem Speicher des Datenträgers gespeichert. Anschließend erfolgt ein so genanntes Verbinden ("Linken"). Im genannten Java Card™ -Beispiel werden dabei Klassen des CAP-Files mit bereits auf dem Datenträger installierten Klassen verbunden ("verlinkt"). Allgemein werden beim Linken Referenzen in Form symbolischer Adressen in dem Programmpaket, beispielsweise Verweise auf Funktionen und/oder Variablen, zu konkreten Speicheradressen des Datenträgerspeichers aufgelöst. Schließlich kann im Rahmen der Installation des Programmpakets auch bereits eine Instantiierung von Objekten erfolgen. Im Zusammenhang mit einem Java Card™ Applet, welches Teil eines zu installierenden Programmpakets ist, erfolgt eine solche Instantiierung beispielsweise durch Aufrufen der standardmäßig vorhandenen install()-Methode des Applets.

Eine solche nachträgliche Installation eines Programmpakets hat den Nachteil, dass sie sehr viele Ressourcen des in der Regel ohnehin ressourcenbegrenzten Datenträgers verbraucht, insbesondere Rechenzeit. Mit anderen Worten, eine solche Installation dauert sehr lange und ist, wenn sie für eine große Menge von Datenträgern durchzuführen, entsprechend kostspielig.

In der DE 10 2004 022177 A1 wird vorgeschlagen, ein entsprechendes Programmpaket dadurch zu optimieren, dass im Wesentlichen funktionslose Initialisierungsroutinen übersprungen und/oder entfernt werden. Auf diese Weise verringert sich die Rechenzeit, welche zur Ausführung der durch das Programmpaket bereitgestellten Applikation benötigt wird. Weiterhin verringert sich in der Regel auch die Größe des Programmpakets. Diese Tatsache wirkt sich auf die Installation positiv aus, da dann im ersten Schritt weniger Daten in den Datenträger eingebracht werden müssen.

Aufgabe der vorliegenden Erfindung ist es, weitere Maßnahmen vorzuschlagen, welche es ermöglichen, die Installation eines Programmpakets auf einem Sicherheitsmodul Ressourcen sparend durchzuführen.

Diese Aufgabe wird durch ein Verfahren, eine Datenverarbeitungsvorrichtung, ein Sicherheitsmodul sowie ein System mit den Merkmalen der nebengeordneten Ansprüche gelöst. Vorteilhafte Ausgestaltungen und Weiterbildungen werden in den abhängigen Ansprüchen angegeben.

Der Erfindung liegt die Idee zugrunde, in dem Programmpaket vorhandene, nicht aufgelöste Referenzen bereits vorab, d.h. vor der Installation des Programmpakets in das Sicherheitsmodul, außerhalb des Sicherheitsmoduls aufzulösen, obwohl das Sicherheitsmodul selbst eine Installationseinrichtung umfasst, die diese Aufgabe übernehmen könnte.

Demnach umfasst ein erfindungsgemäßes Verfahren zum Installieren eines Programmpakets in einem Sicherheitsmodul, welches eine Installationseinrichtung zum Installieren eines Programmpakets in dem Datenträger umfasst, die selbst eingerichtet ist, nicht aufgelöste Referenzen des Programmpakets aufzulösen, zumindest einen Schritt des Auflösens nicht aufgelöster Referenzen in dem zu installierenden Programmpaket vor dem Installieren des Programmpakets in dem Sicherheitsmodul.

Das Auflösen der Referenzen wird dabei außerhalb des Sicherheitsmoduls mittels einer von dem Sicherheitsmodul verschiedenen, erfindungsgemäßen Datenverarbeitungsvorrichtung durchgeführt. Die Datenverarbeitungsvorrichtung umfasst zumindest einen Speicher und einen Prozessor sowie eine Referenzauflösungseinrichtung, welche eingerichtet ist, nicht aufgelöste Referenzen in dem Programmpaket aufzulösen. Die Referenzauflösungseinrichtung in der Datenverarbeitungsvorrichtung ist vorzugsweise als Software-Modul ausgebildet.

Im Folgenden wird das Programmpaket nach dem Auflösen der Referenzen auch als von dem ursprünglichen Programmpaket abgeleitetes Programmpaket bezeichnet. Das ursprünglich zu installierende Programmpaket liegt demnach in einer ersten Fassung vor, in der Referenzen noch unaufgelöst sind. In dem abgeleiteten Programmpaket, d.h. in der zweiten Fassung des Programmpakets, sind die vormals nicht aufgelösten Referenzen dann aufgelöst. Die erfindungsgemäße Datenverarbeitungsvorrichtung erzeugt also aus dem ursprünglichen, in dem Sicherheitsmodul zu installierenden Programmpaket - in seiner ersten Fassung - durch das Auflösen nicht aufgelöster Referenzen ein abgeleitetes Programmpaket - entsprechend dem Programmpakt in seiner zweiten Fassung -, welches dann eingerichtet ist, anstelle des ursprünglichen Programmpakets in dem Sicherheitsmodul installiert zu werden. Die Funktionalität des abgeleiteten Programmpakets unterscheidet sich nicht von der Funktionalität des ursprünglichen Programmpakets. Das Programmpaket in seiner ersten Fassung entspricht einer generischen Form des Programmpakets. In dieser Form ist das Programmpaket geeignet, in einem beliebigen Sicherheitsmodul installiert zu werden. Das abgeleitete Programmpaket, d.h. das Programmpaket in der zweiten Fassung, ist dagegen Sicherheitsmodulabhängig, denn die aufgelösten Referenzen beziehen sich, wie nachstehend nochmals erläutert, auf ein konkretes Sicherheitsmodul.

Das Sicherheitsmodul ist ein Hardwaresicherheitsmodul. Vorzugsweise ist das Sicherheitsmodul ein portabler Datenträger, wie beispielsweise eine Chipkarte - insbesondere in der Form einer herkömmlichen Chipkarte (gemäß ISO 7816), einer SIM-Karte, eines RFID-Karte oder einer sicheren Massenspeicherkarte - oder ein USB-Token. Der portable Datenträger ist reversibel in ein Endgerät einsetzbar. Ebenso kann das Sicherheitsmodul ein fest in ein Endgerät eingebautes Sicherheitsmodul sein, wie beispielsweise ein NFC-Modul (NFC = Near Field Communication), ein TPM-Modul (TPM = Trusted Platform Modul) oder ein TEE-Modul (TEE = Trusted Execution Environment).

Ein Sicherheitsmodul umfasst einen Speicher, einen Prozessor und eine Datenkommunikationsschnittstelle sowie eine Installationseinrichtung. Diese ist eingerichtet, ein Programmpaket in dem Sicherheitsmodul zu installieren und dabei, falls erforderlich, in dem Programmpaket nicht aufgelöste Referenzen aufzulösen. Insbesondere ist die Installationseinrichtung eingerichtet, ein über die Datenkommunikationsschnittstelle empfangenes, mittels des erfindungsgemäßen Verfahrens erzeugtes Programmpaket, d. h. ein Programmpaket, in dem vormals nicht aufgelöste Referenzen bereits aufgelöst sind, in dem Sicherheitsmodul zu installieren.

Ein erfindungsgemäßes System schließlich umfasst ein erfindungsgemäßes Sicherheitsmodul, ein auf dem Sicherheitsmodul installierbares Programmpaket sowie eine erfindungsgemäße Datenverarbeitungsvorrichtung.

Das Auflösen der Referenzen in dem Programmpaket vor dem Installieren desselben in dem Sicherheitsmodul hat den wesentlichen Vorteil, dass während der nachfolgenden Installation keine wertvollen Ressourcen des Sicherheitsmoduls mehr für das Auflösen der Referenzen aufgewendet werden müssen. Insbesondere kann eine Installation des Programmpakets in dem Sicherheitsmodul auf diese Weise wesentlich schneller und damit kostengünstiger durchgeführt werden. Weiter wird das Sicherheitsmodul hinsichtlich seiner Verwendbarkeit durch einen Nutzer vielseitiger, da ein beschriebenes, erfindungsgemäß bereits vorverlinktes Programmpaket schneller und daher mit wesentlich geringerer Fehlerrate sowohl beim Hersteller als auch direkt beim Anwender, beispielsweise über eine Luftschnittstelle (OTA, "over the air"), installiert werden kann.

Die erfindungsgemäße Datenverarbeitungsvorrichtung, welche anstelle des Sicherheitsmoduls nun das Auflösen der Referenzen in dem Programmpaket vorab durchführt, ist hinsichtlich der Ressourcen wesentlich weniger beschränkt ausgebildet als das Sicherheitsmodul, nämlich beispielsweise als Personal Computer oder dergleichen. Die Rechenkapazität und Speicherressourcen einer solchen Vorrichtung übertreffen die entsprechenden Ressourcen eines Sicherheitsmoduls, beispielsweise einer Chipkarte, um ein Vielfaches. Das Auflösen der Referenzen in dem Programmpaket kann dort somit wesentlich schneller und kostengünstiger durchgeführt werden.

Das Auflösen der Referenzen erfolgt in der Datenverarbeitungsvorrichtung durch die Referenzauflösungseinrichtung in der Regel mit Hilfe einer von Parametern des Sicherheitsmoduls abgeleiteten Referenzauflösungsinformation. Diese Referenzauflösungsinformation ermöglicht es der Referenzauflösungseinrichtung jeweils, einer in dem Programmpaket noch nicht aufgelösten Referenz eindeutig eine der Referenz entsprechende, sicherheitsmodulinterne Repräsentation dieser Referenz zuzuordnen, insbesondere eine Speicheradresse eines Speichers des Sicherheitsmoduls. Entsprechend kann die Referenzauflösungsinformation beispielsweise von Parametern wie einem Abbild der ROM-Maske und/oder eines wiederbeschreibbaren, nichtflüchtigen Speichers des jeweiligen Sicherheitsmoduls abgeleitet werden. Das abgeleitete Programmpaket kann daher nicht mehr auf einem beliebigen Sicherheitsmodul installiert werden, sondern lediglich auf demjenigen Sicherheitsmodul, dessen Sicherheitsmodulparameter zum Erstellen der Referenzauflösungsinformation herangezogen worden sind, bzw. einem solchen Sicherheitsmodul, welcher in dieser Hinsicht identische Parameter aufweist.

Vorzugsweise empfängt die Datenverarbeitungsvorrichtung zum Auflösen der Referenzen in dem Programmpaket somit das Programmpaket selbst sowie die dem betreffenden Sicherheitsmodul in der vorstehend beschriebenen Weise zugeordnete Referenzauflösungsinformation, auf welchem das durch die Datenverarbeitungsvorrichtung zu erzeugende, abgeleitete Programmpaket später installiert werden soll.

Das Programmpaket liegt in einer vom Sicherheitsmodul unabhängigen Fassung. Durch das Auflösen der Referenzen in der Datenverarbeitungsvorrichtung wird eine vom Sicherheitsmodul abhängige Fassung des Programmpakets erzeugt. Die beiden Fassungen des Programmpaketes entsprechen einem standardisierten Format, wie beispielsweise CAP-File-Format oder ELF-Format. Beide Fassungen des Programmpakets sind somit geeignet, um durch die Installationseinrichtung auf dem Sicherheitsmodul installiert zu werden.

Das erfindungsgemäße Verfahren eignet sich gemäß einer bevorzugten Ausführungsform insbesondere dazu, nicht aufgelöste Referenzen in einem Programmpaket in Form eines Java Card™ CAP Files aufzulösen. Programmpakete, welche dazu vorgesehen sind, in Sicherheitsmodulen gemäß dem Java Card™ Standard installiert zu werden, werden in der Regel als Java Card™ CAP Files bereitgestellt.

Die Struktur eines solches Java Card™ CAP Files, die darin in der Regel vorliegenden und erfindungsgemäß aufzulösenden Referenzen, das konventionelle Installieren eines Programmpakets in Form eines Java Card™ CAP Files in einem Sicherheitsmodul sowie die Laufzeitumgebung und die virtuelle Maschine in dem Sicherheitsmodul zum Ausführen von Applikationen eines installierten Programmpakets sind dem Fachmann bekannt und detailliert beispielsweise in den folgenden Dokumenten beschrieben: "Virtual Machine Specification, Java Card™ Platform, Version 3.0, Classic Edition", Sun Microsystems, Inc., März 2008, sowie "Runtime Environment Specification, Java Card™ Platform, Version 3.0, Classic Edition", Sun Microsystems, Inc., März 2008.

Das erfindungsgemäße Verfahren kann gemäß einer bevorzugten Ausführungsform insbesondere die folgenden Schritte umfassen: In einem ersten Schritt wird das Programmpaket durch die Datenverarbeitungsvorrichtung geladen. Nachfolgend identifiziert die Referenzauflösungseinrichtung der Datenverarbeitungsvorrichtung nicht aufgelöste Referenzen in dem Programmpaket. In einem dritten Schritt werden die identifizierten, nicht aufgelösten Referenzen dadurch aufgelöst, dass die Referenzen durch mittels der Referenzauflösungsinformation den Referenzen jeweils eindeutig zuordenbare, sicherheitsmodulinterne Repräsentationen ersetzt werden, insbesondere durch Speicheradressen eines Speichers des Sicherheitsmoduls.

Die Referenzauflösungsinformation ist dazu ebenfalls von der Datenverarbeitungsvorrichtung geladen worden, beispielsweise zusammen mit dem Programmpaket. Das in dieser Weise abgeleitete Programmpaket kann anschließend von der Datenverarbeitungsvorrichtung ausgegeben werden, vorzugsweise in einem Format, welches dem Format des ursprünglichen Programmpakets entspricht. Wenn also das ursprüngliche Programmpaket beispielsweise ein Java Card™ CAP File ist, so gilt dies vorzugsweise auch für das abgeleitete Programmpaket. Auf diese Weise kann allgemein die Installation des abgeleiteten Programmpakets in dem Sicherheitsmodul mit den dort ohnehin vorgesehenen Einrichtungen, beispielsweise einem Java Card™ Installer Applet, durchgeführt werden, ohne dass hierzu Änderungen des Sicherheitsmoduls erforderlich wären. D.h. die Installationseinrichtung des Sicherheitsmoduls, welche eingerichtet ist, ein Programmpaket gemäß einer ersten Fassung zu installieren, ist dann in der Regel auch in der Lage, ein abgeleitetes Programmpaket in der zweiten Fassung, welches ein gleiches Format aufweist, zu installieren.

Zusätzlich zum Auflösen der Referenzen - und vorzugsweise daran anschließend - kann die Datenverarbeitungsvorrichtung beim Erzeugen des abgeleiteten Programmpakets weitere Modifikationen an dem ursprünglichen Programmpaket vornehmen, welche ein nachfolgendes Installieren des abgeleiteten Programmpakets in dem Sicherheitsmodul noch Ressourcen schonender durchführen lassen.

Gemäß einer ersten Variante können solche Anteile des ursprünglichen Programmpakts, welche durch das Auflösen der Referenzen in dem Programmpaket verzichtbar geworden sind, aus dem Programmpaket gelöscht werden, so dass diese Anteile in dem abgeleiteten Programmpaket nicht mehr vorhanden sind. Das abgeleitete Programmpaket wird dadurch kleiner, wodurch sich der Installationsprozess, d.h. darin der Schritt des Ladens des Programmpakets in den Sicherheitsmodul, verkürzt. Zusätzlich benötigt das abgeleitete Programmpaket entsprechend weniger Speicherplatz in dem Sicherheitsmodul.

Das Löschen nicht mehr benötigter Anteile kann beispielsweise dadurch möglich werden, dass lediglich ein Eintrag von ursprünglich mehrfach angelegten, identischen Einträgen in einer Konstantentabelle des Programmpakets im abgeleiteten Programmpaket beibehalten wird und für die restlichen Einträge, die in der Konstantentabelle dann gelöscht werden können, auf den einen verbliebenen Eintrag verwiesen wird.

Im Falle eines Java Card™ CAP Files als Programmpaket ist nach dem Auflösen der Referenzen und entsprechendem Darstellen des abgeleiteten Programmpakets im Format eines Java Card™ CAP Files die "Reference-Location-Component" dieses abgeleiteten Java Card™ CAP Files zwar vorhanden, aber leer. Der Anteil der entsprechenden Komponente des ursprünglichen Java Card™ CAP Files fällt also auch hier weg.

Es ist gemäß dieser ersten Variante möglich, dass das Format des abgeleiteten Programmpakets von dem Format abweicht, welches die Installationseinrichtung des Sicherheitsmoduls erwartet. Die Installationseinrichtung könnte beispielsweise gemäß dem von ihr erwarteten Formal des Programmpakets eine nicht leere Liste nicht aufgelöster Referenzen erwarten. Diese Liste wäre in dem abgeleiteten Programmpaket allerdings dann leer, da keine nicht aufgelösten Referenzen mehr vorliegen. Um Fehler bei der Installation des abgeleiteten Programmpakets durch die Installationseinrichtung zu vermeiden, kann diese einerseits dahingehend angepasst werden, dass auch eine leere Liste - ohne Fehlermeldung - akzeptiert wird, d.h. dass die Installationseinrichtung erkennt, dass sämtliche Referenzen bereits aufgelöst sind. Auf der anderen Seite ist es möglich, das abgeleiteten Programmpakets derart zu erzeugen, dass es dem von der Installationseinrichtung erwarteten Format entspricht, indem beispielsweise eine "künstliche", noch aufzulösende Referenz verbleibt, um eine leere Liste nicht aufgelöster Referenzen zu vermeiden.

Gemäß einer zweiten Variante, welche mit der ersten Variante kombiniert werden kann, kann die Datenverarbeitungsvorrichtung nach dem Auflösen der Referenzen ein Speicherabbild des Programmpakets erzeugen, welches einer internen Repräsentation eines in dem Sicherheitsmodul bereits installierten, entsprechenden Programmpakets entspricht. Wird dieses Speicherabbild bei der Installation - anstelle eines vorstehend beschriebenen, abgeleiteten Programmpakets - in den Sicherheitsmodul eingebracht, so entfallen in dem Sicherheitsmodul einige bei der Installation eines abgeleiteten Programmpakets ansonsten durchzuführende Schritte, beispielsweise das Anlegen und Initialisieren von Einträgen, welche Sicherheitsmodulintern von einer Laufzeitumgebung verwendet werden, um mittels des Programmpakets installierte Applikationen zu unterstützen. Auf diese Weise kann der Installationsprozess in dem Sicherheitsmodul nochmals mit weniger Rechenaufwand durchgeführt werden.

In der Regel wird dem Speicherabbild ein Informationsdatenanteil, beispielsweise in Form einer Header-Datei oder dergleichen, hinzugefügt, welche angibt, wie das dem Informationsdatenanteil angefügte Speicherabbild in dem Sicherheitsmodul zu behandeln ist. Die Struktur dieses gesamten Pakets, Informationsdatenanteil plus Speicherabbild, gleicht dabei vorzugsweise zumindest für das Laden des Pakets aus Sicht des Sicherheitsmoduls der Struktur eines gewöhnlichen Programmpakets. Das Speicherabbild kann aber auch als gewöhnlicher Datenblock einer zu diesem Zweck verwendeten Pseudoapplikation "maskiert" werden. Beide skizzierten Vorgehensweisen ermöglichen das ansonsten nicht mögliche Laden eines Speicherabbildes in den Sicherheitsmodul.

Gemäß dieser Variante kann es notwendig sein, dass eine Installationseinrichtung des Sicherheitsmoduls entsprechend eingerichtet ist, den Informationsdatenanteil bzw. die Pseudoapplikation zu erkennen und zu interpretieren, so dass das Speicherabbild in der gewünschten Weise in dem Sicherheitsmodul gespeichert wird.

Gemäß einer dritten Variante kann es schließlich vorgesehen sein, dass auch der letzte Schritt eines Installationsprozesses, eine Instantiierung, bereits außerhalb des Sicherheitsmoduls und vor der eigentlichen Installation des Programmpakets in dem Sicherheitsmodul, durch die Datenverarbeitungsvorrichtung vorweggenommen wird. D.h. die Datenverarbeitungsvorrichtung führt nach dem Auflösen der Referenzen und gegebenenfalls nach dem Erzeugen des vorstehend beschriebenen Speicherabbildes eine Instantiierung mit Bezug auf das Programmpaket durch und stellt zumindest ein dabei erzeugtes Objekt zusammen mit dem Programmpaket bzw. dem Speicherabbild zum Laden in den Sicherheitsmodul bereit. Somit kann auch dieser Schritt während des nachfolgend durchzuführenden Installationsprozesses in dem Sicherheitsmodul entfallen und die Installation nochmals Ressourcen sparender durchgeführt werden.

Die vorliegende Erfindung wird im Folgenden mit Bezug auf die beiliegenden Zeichnungen beispielhaft für einen portablen Datenträger als Sicherheitsmodul beschrieben. Darin zeigen
- Fig. 1: eine bevorzugte Ausführungsform eines erfindungsgemäßen Sicherheitsmoduls und
- Fig. 2: Schritte einer bevorzugten Ausführungsform des erfindungsgemäßen Verfahrens.

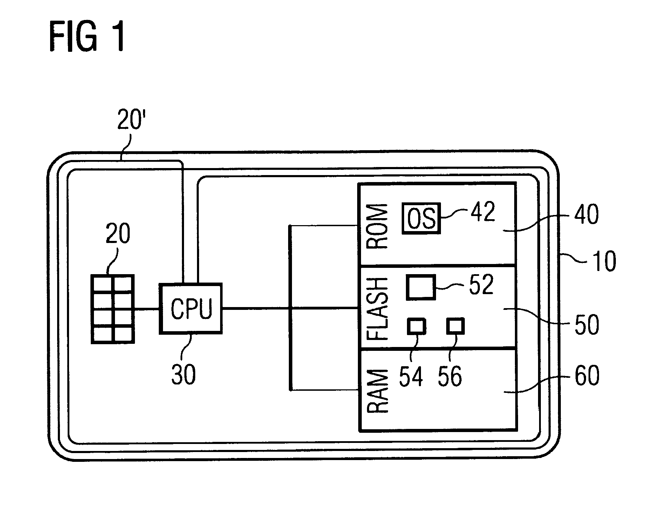

Mit Bezug auf Fig.1 umfasst ein Datenträger 10, der hier als Chipkarte dargestellt ist, Datenkommunikationsschnittstellen 20, 20', einen Prozessor 30 sowie verschiedene Speicher 40, 50 und 60. Der Datenträger 10 kann auch in anderer Bauform vorliegen.

Als Datenkommunikationsschnittstellen 20, 20' umfasst der Datenträger 10 ein Kontaktfeld 20 zur kontaktbehafteten Datenkommunikation sowie eine Antennenspule 20' zur kontaktlosen Datenkommunikation. Alternative Datenkommunikationsschnittstellen können vorgesehen sein. Es ist weiterhin möglich, dass der Datenträger 10 lediglich eine Art der Datenkommunikation unterstützt, also lediglich kontaktbehaftet oder kontaktlos.

Der nicht flüchtige, nicht wiederbeschreibbare ROM-Speicher 40 umfasst ein Betriebssystem (OS) 42 des Datenträgers 10, welches den Datenträger 10 steuert. Zumindest Teile des Betriebssystems 42 können auch in dem nicht flüchtigen, wiederbeschreibbaren Speicher 50 gespeichert sein. Dieser kann beispielsweise als FLASH-Speicher vorliegen.

Der Speicher 50 umfasst eine Laufzeitumgebung 52, beispielsweise in Form eines Java Card™ Runtime Environment, welche ihrerseits eine Klassenbibliothek und eine virtuelle Maschine zum Ausführen entsprechender Applikationen umfasst, beispielsweise in Form von Java Card™ Applets. Teile der Laufzeitumgebung 52 oder die gesamte Laufzeitumgebung 52 können auch in dem ROM-Speicher 40 gespeichert sein.

Der Speicher 50 umfasst weiterhin eine Installationsapplikation 54, welche eingerichtet ist, das Installieren von Programmpaketen, beispielsweise in der Form von Java Card™ CAP Files, in dem Datenträger zu unterstützen. Die Installationsapplikation 54 ist insbesondere eingerichtet, in dem Programmpaket noch nicht aufgelöste Referenzen aufzulösen. Die Installationsapplikation 54 kann zum Beispiel als Java Card™ Installer Applet vorliegen. Die Installationsapplikation 54 kann um eine Erweiterung 56 ergänzt werden, welche es der Installationsapplikation 54 ermöglicht, auch solche Programmpakete in dem Datenträger 10 zu installieren, welche von einer standardgemäßen Form in nachstehend beschriebener Weise geringfügig abweichen.

Der Speicher 50 kann weitere Daten, beispielsweise betreffend einen späteren oder aktuellen Nutzer des Datenträgers 10, und/oder bereits installierte Applikationen enthalten.

Der flüchtige, wiederbeschreibbare RAM-Speicher 60 dient dem Datenträger 10 als Arbeitsspeicher.

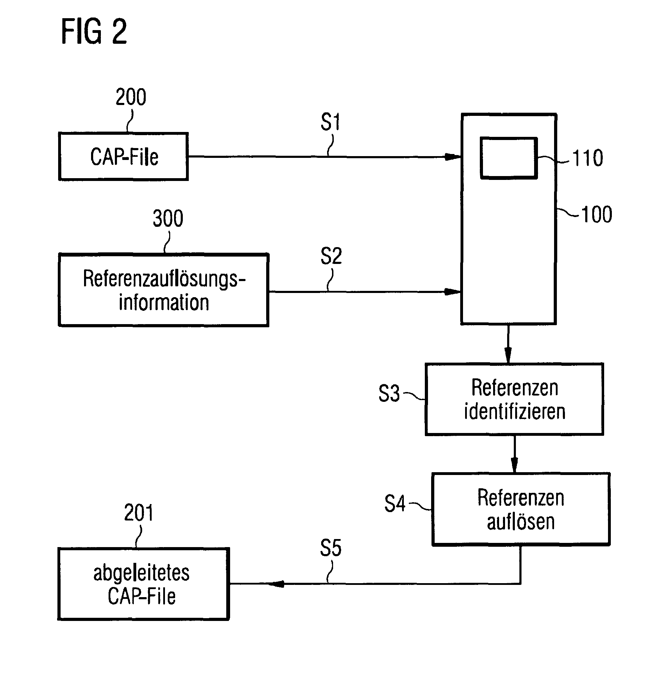

Bevor mit Bezug auf Fig. 2 ein Verfahren zum Installieren eines Programmpakets in dem Datenträger 10 beschrieben wird, soll zumindest skizziert werden, wie ein solcher Installationsprozess bisher durchgeführt worden ist.

Ein zu installierendes Programmpaket wird dabei zuerst datenblockweise in einen Speicher 50 des Datenträgers 10 geladen. Dazu kommen in der Regel bekannte Ladekommandos zum Einsatz, beispielsweise in der Form von APDUs. Wird als Programmpaket beispielsweise ein Java Card™ CAP File installiert, wird dieses vorzugsweise aufgeteilt nach den darin vorgesehenen Komponenten geladen. Die Struktur eine Java Card™ CAP Files ist detailliert in Kapitel 6 der vorstehend genannten Spezifikation "Virtual Machine Specification, Java Card™ Platform, Version 3.0, Classic Edition" beschrieben.

Beim Einbringen der Komponente "Constant-Pool" beispielsweise ist es möglich, dass, nachdem ein Datenblock der Komponente in den Datenträger 10 geladen worden ist, dieser Datenblock von dem Datenträger 10 interpretiert wird und entsprechende Verwaltungsinformationen angelegt und/oder aktualisiert werden, bevor in dem Datenblock vorliegende, nicht aufgelöste Referenzen direkt aufgelöst werden.

Alternativ ist es möglich, zuerst sämtliche Datenblöcke der Komponente in den Datenträger 10 zu laden, um anschließend den Inhalt der gesamten Komponente zu interpretieren, die Datenpakete entsprechend aufzubereiten und Verwaltungsinformationen anzulegen und/ oder zu aktualisieren, bevor die in der gesamten Komponente vorliegenden Referenzen aufgelöst werden.

Bei der Bearbeitung von Datenblöcken einer "Method"-Komponente des Java Card™ CAP Files verlaufen die Installationsschritte ähnlich. Pro Datenblock, der in den Datenträger geladen wird, erfolgt datenträgerintern eine Interpretation der empfangenen Daten, ein Aktualisieren von Verwaltungsinformation sowie anschließend ein Auflösen der Referenzen. Im Falle der "Method"-Komponente werden entsprechende Datenblöcke dazu beispielsweise im Heap gespeichert und noch nicht aufgelöste Referenzen werden sukzessive aufgelöst. Allein das Auflösen der Referenzen kann insbesondere im Zusammenhang mit dieser Komponente einen nicht unerheblichen Anteil des gesamten Installationsaufwandes ausmachen.

Mit Bezug auf Fig. 2 wird nun eine bevorzugte Ausführungsform eines Verfahrens zum Installieren eines Programmpakets 200 in einem portablen Datenträger 10 beschrieben. Beispielhaft wird als Programmpaket 200 ein Java Card™ CAP File beschrieben. Andere, ähnliche Programmpakete, welche bereits in Form von Bytecode, in ähnlicher Weise interpretierbarem Code oder in Maschinecode vorliegen, aber noch nicht aufgelöste Referenzen umfassen, können in analoger Weise mit dem nachstehend beschriebenen Verfahren behandelt werden.

In einen ersten Schritt S1 wird das Programmpaket 200 außerhalb des Datenträgers 10 in eine Datenverarbeitungsvorrichtung 100 geladen. Die Datenverarbeitungsvorrichtung 100 umfasst eine Referenzauflösungseinrichtung 110, vorzugsweise als Software-Modul. Als Datenverarbeitungsvorrichtung 100 können verschiedene Arten von Vorrichtungen eingesetzt werden, vorteilhaft jedoch solche, welche bezüglich ihrer Speicher- und Rechenressourcen besser ausgerüstet sind als ein portabler Datenträger 10 in Form einer Chipkarte oder dergleichen. Als Datenverarbeitungsvorrichtung 100 kann also beispielsweise ein Personal Computer, ein Notebook, ein Tablet oder dergleichen dienen.

In einem zweiten Schritt S2, welcher auch vor oder zusammen mit dem ersten Schritt S1 ausgeführt werden kann, werden Referenzauflösungsinformationen 300 in die Datenverarbeitungsvorrichtung 100 geladen. Diese Referenzauflösungsinformationen 300 dienen der Referenzauflösungseinrichtung 110 dazu, nicht aufgelöste Referenzen in dem Programmpaket 200 auflösen zu können. Die Referenzauflösungsinformation 300 kann beispielsweise ein Speicherabbild des ROM-Speichers 40 des Datenträgers 10 umfassen, auf dem das Programmpaket 200 nachfolgend installiert werden soll. Auch ein Abbild eines nichtflüchtigen Speichers 50 des Datenträgers 10 kann Teil der Referenzauflösungsinformation 300 sein.

Mittels dieser Daten kann die Referenzauflösungseinrichtung 110 diejenigen Einträge bestimmen, welche schließlich die in dem Programmpaket 200 noch nicht aufgelösten Referenzen ersetzen. Aus dem oder den vorstehend genannten Speicherabbildern kann die Referenzauflösungseinrichtung 110 beispielsweise eine Tabelle ableiten, welche, mit Bezug auf ein Java Card™ CAP File als Programmpaket 200, Referenzinformationen, wie beispielsweise Package-Token, Class-Token, Method-Token, des weiteren Konstanteninformation, "Reference-Location"-Information und dergleichen enthalten kann. Die Tabelle kann der Datenverarbeitungsvorrichtung 100 aber auch direkt als Referenzauflösungsinformation 300 bereitgestellt werden bzw. kann ein Teil der Tabelle bereits in Schritt S2 bereitgestellt werden. Der restliche Teil der zum Auflösen der Referenzen benötigten Informationen wird durch die Referenzauflösungseinrichtung 110 aus den genannten Speicherabbildern oder dergleichen abgeleitet.

Nachdem die Datenverarbeitungsvorrichtung 100 in den Schritten S1 und S2 das Programmpaket 200 sowie die Referenzauflösungsinformation 300 empfangen hat, identifiziert sie in Schritt S3 mittels der Referenzauflösungseinrichtung 110 die in dem Programmpaket 200 noch aufzulösenden Referenzen. Diese können beispielsweise in Form einer Liste aufbereitet werden.

In Schritt S4 schließlich werden die identifizierten Referenzen aufgelöst, d.h. eine symbolische Referenz in dem Programmpaket 200 wird durch eine der Referenz zugeordnete datentägerinterne Repräsentation ersetzt, beispielsweise durch eine konkrete Speicheradresse eines Speichers 40, 50 des portablen Datenträgers 10. Die Zuordnung und das Ersetzen erfolgt dabei durch die Referenzauflösungseinrichtung 110 mit Hilfe der in Schritt S2 empfangenen Referenzauflösungsinformation 300.

Vorzugsweise wird das Programmpaket 200, wenn, wie beschrieben, die Referenzen in Schritt S4 aufgelöst worden sind, in einem nicht gezeigten, weiteren Schritt derart aufbereitet, dass es dem vorgegebenen Format des ursprünglichen Programmpakets 200 entspricht. Im Zusammenhang mit einem Java Card™ CAP File als geladenes Programmpaket 200 wird auch das abgeleitete Programmpaket 201 derart erzeugt, dass es den an ein solches Dateiformat geforderten Vorgaben entspricht.

Anschließend kann das abgeleitete Programmpaket 201, wie mit Bezug auf Schritt S5 illustriert, ausgegeben werden. Es ist gleichfalls möglich, dass das abgeleitete Programmpaket 201 direkt zur Installation in dem Datenträger 10 an diesen übergeben wird. Dazu kann der Datenträger 10 beispielsweise über ein geeignetes Lesegerät mit der Datenverarbeitungsvorrichtung 100 verbunden sein. Das abgeleitete Programmpaket 201 wird in den Datenträger 10 geladen und die Installationsapplikation 54 des Datenträgers 10 installiert schließlich das abgeleitete Programmpaket 201 in dem Datenträger 10.

Vor dem Ausgeben in Schritt S5 oder einem Übergeben an den bzw. Laden in den Datenträger 10 können von der Referenzauflösungseinrichtung 110 in der Datenverarbeitungsvorrichtung 100 noch optionale, weitere Schritte zur zusätzlichen Optimierung des abgeleiteten Programmpakets 201 hinsichtlich Ressourcen schonender Installation in dem Datenträger vorgenommen werden.

Beispielsweise können Anteile des erzeugten, abgeleiteten Programmpakets 201, welche darin als Ergebnis der Auflösung der Referenzen keine Bedeutung mehr haben, gelöscht werden. Mit Bezug auf ein Java Card™ CAP File als Programmpaket 200 wird die "Reference-Location"-Komponente in dem abgeleiteten Programmpaket 201 beispielsweise leer sein, da alle in der "Method"-Komponente ursprünglich vorhandenen, nicht aufgelösten Referenzen nun aufgelöst sind. Es ist weiterhin möglich, mehrfach in den "Constant-Pool"-Komponenten ursprünglich identisch angelegte Einträge durch einen davon zu ersetzen und die restlichen durch Verweise zu realisieren. Schließlich können nicht mehr benötigte Komponenten des Java Card™ CAP Files gegebenenfalls ganz entfallen, wenn diese mit Bezug auf eine konkrete ROM-Maske des Datenträgers 10 bei der Installation und auch danach nicht mehr benötigt werden. Dies kann beispielsweise für die "Descriptor"-Komponente eines Java Card™ CAP Files der Fall sein.

Alle diese Maßnahmen beschleunigen eine Installation des derart modifizierten Java Card™ CAP Files, da weniger Daten in der Datenträger 10 geladen werden müssen. Zusätzlich wird dort weniger Speicherplatz benötigt.

Weiter kann durch die Referenzauflösungseinrichtung 110 das abgeleitete Programmpaket 201 derart modifiziert werden, dass es die Form eines Speicherabbildes annimmt, welches einem Speicherabbild eines bereits in dem Datenträger 10 installierten Programmpakets 201 entspricht. Dabei kann die Referenzauflösungseinrichtung 110 - falls notwendig - wieder auf entsprechende, den speziellen Datenträger 10 betreffende Informationen zurückgreifen, welche bereits in Schritt S2 empfangen worden sind, d.h. Teil der Referenzauflösungsinformationen sind, welche in dieser Weise erweitert werden. Die Installation des derart aufbereiteten, abgeleiteten Programmpakets 201 ist dann noch wesentlich schneller durchzuführen, da beispielsweise ein Anlegen und/oder Aufbereiten von Verwaltungsinformation in dem Datenträger 10 nicht mehr erfolgen muss. Solche Einträge sind in dem erzeugten Speicherabbild bereits enthalten.

Für diese Variante kann es notwendig sein, dass eine Installationseinrichtung 54 auf dem Datenträger 10 eine Erweiterung 56 umfasst, welche eingerichtet ist, ein solches Speicherabbild als einem Programmpaket 201 entsprechend zu erkennen und in dem Datenträger 10 zu installieren, was im Wesentlichen durch einfaches Kopieren an die dafür vorgesehen Speicherbereiche realisiert wird. Die Funktionalität der Erweiterung 56 kann aber auch bereits Teil der Installationsapplikation 54 sein.

Gemäß einer weiteren Variante kann die Installation des Programmpakets 201 auf den Datenträger 10 durch die Referenzauflösungseinrichtung 110 in der Datenverarbeitungsvorrichtung 100 noch weiter vorbereitet werden, indem beispielsweise bereits eine Instantiierung stattfindet. Im Zusammenhang mit einem Java CardTM CAP File beispielsweise erfolgt dies in der Regel für ein in dem Programmpaket enthaltenes Java Card™ Applet durch einen Aufruf der install()-Methode des Applets. Dabei erzeugte Objekte werden dann durch die Referenzauflösungseinrichtung 110 zusammen mit dem abgeleiteten Programmpaket 201 oder einem Speicherabbild desselben in Schritt S5 bereitstellt.

Auf diese Weise kann auch ein Instantiierungsschritt bei der Installation des abgeleiteten Programmpakets 201 in dem Datenträger 10 eingespart werden. Wie mit Bezug auf die vorstehende Variante bereits erwähnt, sollte eine entsprechende Installationsapplikation 54 des Datenträgers 10 eingerichtet sein, ein derartig um die erzeugten Objekte ergänztes Programmpaket 201 bei der Eingabe zu erkennen und entsprechend zu bearbeiten.

## Patentansprüche

1. Verfahren zum Installieren eines Programmpakets (200) in einem Sicherheitsmodul (10) durch eine Installationseinrichtung (54, 56) des Sicherheitsmoduls (10), welche eingerichtet ist, unaufgelöste Referenzen des Programmpakets (200) aufzulösen, **dadurch gekennzeichnet, dass** unaufgelöste Referenzen des zu installierenden Programmpakets (200) vor dem Installieren des Programmpakets (200) außerhalb des Sicherheitsmoduls (10) mittels einer von dem Sicherheitsmodul (10) verschiedenen Datenverarbeitungsvorrichtung (100) aufgelöst werden (S4).

2. Verfahren nach Anspruch 1, **dadurch gekennzeichnet, dass** die Installationseinrichtung (54, 56) des Sicherheitsmoduls (10) weiterhin eingerichtet ist, ein Programmpaket (201) mit bereits aufgelösten Referenzen in dem Sicherheitsmodul (10) zu installieren.

3. Verfahren nach Anspruch 1 oder 2, **dadurch gekennzeichnet, dass** aus dem Programmpaket in einer sicherheitsmodulunabhängigen Fassung durch den Schritt des Auflösens (S4) der Referenzen eine sicherheitsmodulabhängige Fassung des Programmpaketes erzeugt wird, wobei die Installationseinrichtung (54, 56) zum Installieren sicherheitsmodulunabhängiger Programmpakete vorgesehen ist und die Installationseinrichtung (54, 56) die sicherheitsmodulabhängige Fassung des Programmpaketes auf dem Sicherheitsmodul installiert.

4. Verfahren nach einem der Ansprüche 1 bis 3, **dadurch gekennzeichnet, dass** das Auflösen der Referenzen mit Hilfe einer von Parametern des Sicherheitsmoduls (10) abgeleiteten Referenzauflösungsinformation (300) durchgeführt wird.

5. Verfahren nach Anspruch 3 oder 4, **gekennzeichnet durch** die Schritte:
- Laden (S1) des Programmpakets (200) **durch** die Datenverarbeitungsvorrichtung (100);
- Identifizieren (S3) der nicht aufgelösten Referenzen in dem Programmpaket (200) **durch** die Datenverarbeitungsvorrichtung (100);
- Auflösen (S4) der identifizierten, nicht aufgelösten Referenzen **dadurch**, dass die Referenzen **durch** mittels der Referenzauflösungsinformation (300) den Referenzen jeweils eindeutig zuordenbare, sicherheitsmodulinterne Repräsentationen ersetzt werden, insbesondere **durch** Speicheradressen eines Speichers (40; 50) des Sicherheitsmoduls (10).

6. Verfahren nach Anspruch 5, **gekennzeichnet durch** den weiteren Schritt, dass solche Anteile des Programmpakts (200), welche **durch** das Auflösen der Referenzen in dem Programmpaket (200) verzichtbar geworden sind, in dem Programmpaket (200) gelöscht werden.

7. Verfahren nach einem der Ansprüche 5 oder 6, **dadurch gekennzeichnet, dass** die Datenverarbeitungsvorrichtung (100) nach dem Auflösen der Referenzen ein Speicherabbild des Programmpakets (200) erzeugt, welches einer internen Repräsentation eines in dem Sicherheitsmodul (10) installierten, entsprechenden Programmpakets (200) entspricht.

8. Verfahren nach einem der Ansprüche 4 bis 7, **dadurch gekennzeichnet, dass** die Datenverarbeitungsvorrichtung (100) nach dem Auflösen der Referenzen eine Instantiierung mit Bezug auf das Programmpaket (200) durchführt und zumindest ein dabei erzeugtes Objekt zusammen mit dem Programmpaket (200) bereitstellt (S5).

9. Verfahren nach einen der Ansprüche 1 bis 8, **dadurch gekennzeichnet, dass** nicht aufgelöste Referenzen in einem Programmpaket (200) in Form eines Java Card™ CAP Files aufgelöst werden.

10. Verfahren nach einem der Ansprüche 1 bis 9, **gekennzeichnet durch** die weiteren Schritte nach dem Auflösen der Referenzen in dem Programmpaket (200):
- Laden des Programmpakets (201) mit den aufgelösten Referenzen in den Sicherheitsmodul (10);
- Installieren des geladenen Programmpakets (201) in dem Sicherheitsmodul (10) **durch** die Installationseinrichtung (54, 56).

11. Datenverarbeitungsvorrichtung (100), umfassend zumindest einen Speicher und einen Prozessor sowie eine Referenzauflösungseinrichtung (110), welche eingerichtet ist, ein Verfahren nach einem der Ansprüche 1 bis 10 durchzuführen.

12. Datenverarbeitungsvorrichtung (100) nach Anspruch 11, **dadurch gekennzeichnet, dass** die Referenzauflösungseinrichtung (110) in der Datenverarbeitungsvorrichtung (100) als Software-Modul ausgebildet ist.

13. Sicherheitsmodul (10), umfassend einen Speicher (40; 50; 60), einen Prozessor (30) und eine Datenkommunikationsschnittstelle (20; 20') sowie eine Installationseinrichtung (54, 56) zum Installieren eines Programmpakets (200) auf dem Sicherheitsmodul (10), wobei die Installationseinrichtung (54, 56) eingerichtet ist, nicht aufgelöste Referenzen des Programmpakets (200) aufzulösen, **dadurch gekennzeichnet, dass** die Installationseinrichtung weiterhin eingerichtet ist, ein über die Datenkommunikationsschnittstelle (20; 20') empfangenes, mittels eines Verfahrens nach einem der Ansprüche 1 bis 9 erzeugtes Programmpaket (201) in dem Sicherheitsmodul (10) zu installieren.

14. Sicherheitsmodul (10) nach Anspruch 13, **dadurch gekennzeichnet, dass** das Sicherheitsmodul (10) eingerichtet ist, mittels der Installationseinrichtung (54, 56) Programmpakete (200) in Form von Java Card™ CAP Files zu installieren.

15. System, umfassend ein Sicherheitsmodul (10) gemäß Anspruch 13 oder 14, ein auf dem Sicherheitsmodul (10) installierbares Programmpaket (200) sowie eine Datenverarbeitungsvorrichtung (100) nach einem der Ansprüche 11 oder 12.

## Geänderte Patentansprüche

### Geänderte Patentansprüche gemäss Regel 137(2) EPÜ.

**1.** Verfahren zum Installieren eines Programmpakets (200) in einem Sicherheitsmodul (10) durch eine Installationseinrichtung (54, 56) des Sicherheitsmoduls (10), welche eingerichtet ist, unaufgelöste Referenzen des Programmpakets (200) aufzulösen, wobei unaufgelöste Referenzen des zu installierenden Programmpakets (200) vor dem Installieren des Programmpakets (200) außerhalb des Sicherheitsmoduls (10) mittels einer von dem Sicherheitsmodul (10) verschiedenen Datenverarbeitungsvorrichtung (100) aufgelöst werden (S4) , **dadurch gekennzeichnet, dass** aus dem Programmpaket in einer sicherheitsmodulunabhängigen Fassung durch den Schritt des Auflösens (S4) der Referenzen eine sicherheitsmodulabhängige Fassung des Programmpaketes erzeugt wird, wobei die Installationseinrichtung (54, 56) zum Installieren sicherheitsmodulunabhängiger Programmpakete vorgesehen ist und die Installationseinrichtung (54, 56) die sicherheitsmodulabhängige Fassung des Programmpaketes auf dem Sicherheitsmodul installiert.

**2.** Verfahren nach Anspruch 1, **dadurch gekennzeichnet, dass** die Installationseinrichtung (54, 56) des Sicherheitsmoduls (10) weiterhin eingerichtet ist, ein Programmpaket (201) mit bereits aufgelösten Referenzen in dem Sicherheitsmodul (10) zu installieren.

**3.** Verfahren nach einem der Ansprüche 1 bis 2, **dadurch gekennzeichnet, dass** das Auflösen der Referenzen mit Hilfe einer von Parametern des Sicherheitsmoduls (10) abgeleiteten Referenzauflösungsinformation (300) durchgeführt wird.

**4.** Verfahren nach Anspruch 1 oder 3, **gekennzeichnet durch** die Schritte:
- Laden (S1) des Programmpakets (200) **durch** die Datenverarbeitungsvorrichtung (100);
- Identifizieren (S3) der nicht aufgelösten Referenzen in dem Programmpaket (200) **durch** die Datenverarbeitungsvorrichtung (100);
- Auflösen (S4) der identifizierten, nicht aufgelösten Referenzen **dadurch**, dass die Referenzen **durch** mittels der Referenzauflösungsinformation (300) den Referenzen jeweils eindeutig zuordenbare, sicherheitsmodulinterne Repräsentationen ersetzt werden, insbesondere durch Speicheradressen eines Speichers (40; 50) des Sicherheitsmoduls (10).

**5.** Verfahren nach Anspruch 4, **gekennzeichnet durch** den weiteren Schritt, dass solche Anteile des Programmpakts (200), welche **durch** das Auflösen der Referenzen in dem Programmpaket (200) verzichtbar geworden sind, in dem Programmpaket (200) gelöscht werden.

**6.** Verfahren nach einem der Ansprüche 4 oder 5, **dadurch gekennzeichnet, dass** die Datenverarbeitungsvorrichtung (100) nach dem Auflösen der Referenzen ein Speicherabbild des Programmpakets (200) erzeugt, welches einer internen Repräsentation eines in dem Sicherheitsmodul (10) installierten, entsprechenden Programmpakets (200) entspricht.

**7.** Verfahren nach einem der Ansprüche 4 bis 6, **dadurch gekennzeichnet, dass** die Datenverarbeitungsvorrichtung (100) nach dem Auflösen der Referenzen eine Instantiierung mit Bezug auf das Programmpaket (200) durchführt und zumindest ein dabei erzeugtes Objekt zusammen mit dem Programmpaket (200) bereitstellt (S5).

**8.** Verfahren nach einen der Ansprüche 1 bis 7, **dadurch gekennzeichnet, dass** nicht aufgelöste Referenzen in einem Programmpaket (200) in Form eines Java Card™ CAP Files aufgelöst werden.

**9.** Verfahren nach einem der Ansprüche 1 bis 8, **gekennzeichnet durch** die weiteren Schritte nach dem Auflösen der Referenzen in dem Programmpaket (200):
- Laden des Programmpakets (201) mit den aufgelösten Referenzen in den Sicherheitsmodul (10);
- Installieren des geladenen Programmpakets (201) in dem Sicherheitsmodul (10) **durch** die Installationseinrichtung (54, 56).

**10.** Datenverarbeitungsvorrichtung (100), umfassend zumindest einen Speicher und einen Prozessor sowie eine Referenzauflösungseinrichtung (110), welche eingerichtet ist, ein Verfahren nach einem der Ansprüche 1 bis 9 durchzuführen.

**11.** Datenverarbeitungsvorrichtung (100) nach Anspruch 10, **dadurch gekennzeichnet, dass** die Referenzauflösungseinrichtung (110) in der Datenverarbeitungsvorrichtung (100) als Software-Modul ausgebildet ist.

**12.** Sicherheitsmodul (10), umfassend einen Speicher (40; 50; 60), einen Prozessor (30) und eine Datenkommunikationsschnittstelle (20; 20') sowie eine Installationseinrichtung (54, 56) zum Installieren eines Programmpakets (200) auf dem Sicherheitsmodul (10), wobei die Installationseinrichtung (54, 56) eingerichtet ist, nicht aufgelöste Referenzen des Programmpakets (200) aufzulösen, **dadurch gekennzeichnet, dass** die Installationseinrichtung weiterhin eingerichtet ist, ein über die Datenkommunikationsschnittstelle (20; 20') empfangenes, mittels eines Verfahrens nach einem der Ansprüche 1 bis 8 erzeugtes Programmpaket (201) in dem Sicherheitsmodul (10) zu installieren.

**13.** Sicherheitsmodul (10) nach Anspruch 12, **dadurch gekennzeichnet, dass** das Sicherheitsmodul (10) eingerichtet ist, mittels der Installationseinrichtung (54, 56) Programmpakete (200) in Form von Java Card™ CAP Files zu installieren.

**14.** System, umfassend ein Sicherheitsmodul (10) gemäß Anspruch 12 oder 13, ein auf dem Sicherheitsmodul (10) installierbares Programmpaket (200) sowie eine Datenverarbeitungsvorrichtung (100) nach einem der Ansprüche 10 oder 11.
